# EUROPEAN PATENT SPECIFICATION

(11) **EP 4 042 057 B1**
(45) Date of publication and mention of the grant of the patent: **01.05.2024**
(21) Application number: 20776245.1
(22) Date of filing: 08.09.2020
(51) Int. Cl.: F16L 55/115, F16L 57/00

(54) **DEVICE FOR CLOSING A TUBE**
VORRICHTUNG ZUM VERSCHLIESSEN EINES ROHRES
DISPOSITIF POUR FERMER UN TUBE

(30) Priority: 11.10.2019 NL 2023995
(43) Date of publication of application: 17.08.2022
(73) Proprietor: Roteal B.V., 9407 TE Assen (NL)
(72) Inventor: DE WEERD, René, 9407 TE Assen (NL); LOORBACH, Richt, 9407 TE Assen (NL)
(74) Representative: Algemeen Octrooi- en Merkenbureau B.V.
(86) International application number: PCT/NL2020/050553
(87) International publication number: WO 2021/071355

(56) References cited:
- CN-A- 109 990 163
- US-A- 5 676 174

## Description

The present disclosure relates to a device for closing an end of a tube.

A known device for closing an end of a tube, such as a water supply tube, comprises a cap that may be glued or soldered to the tube for closing the tube at an outer end thereof. A drawback of the known device is that re-opening the tube is relatively cumbersome. US5676174 discloses an outer diameter pipe plug. CN109990163 A discloses a device for quickly blocking an opening of a pipe fitting.

An objective of the present disclosure is to provide a device for closing an end of a tube that allows re-opening of the end of the tube in a relative practical manner.

The objective is realised by the device according to the present disclosure for closing an end of a tube having an axial direction, such as a water supply tube in a domestic environment such as a house.

The device according to the present disclosure comprises a closing element arranged for being in contact with an outer surface of said tube, said closing element comprising a clamping portion for clamping, via said closing element, said device onto said tube and a sealing portion for sealing, by said device, said end of said tube.

By providing the closing element with a clamping portion and a sealing portion, the functionality of clamping and sealing may be at least partly separated, preferably completely separated, thereby allowing to realise a relative good sealing and clamping without the need for use of a glue. Furthermore, the sealing functionality of the device may be realised relatively independently from the clamping functionality.

The device further comprises a clamping element arranged for, in a first condition of said clamping element, transferring a clamping force onto said clamping portion of said closing element for realising, via said closing element, said clamping and transferring a sealing force onto said sealing portion of said closing element for realising, by said device, said sealing and arranged for, in a second condition of said clamping element, allowing said device to be removed from said tube.

The device according to the present disclosure comprises an actuation element arranged for bringing said clamping element in said first condition or said second condition by actuation of said actuation element about an actuation axis.

The present disclosure relies at least partly on the insight that the known device does not allow for re-opening of the tube while maintaining a length of the tube unaffected. Commonly, the known device is removed from the tube by cutting a piece provided with the known device from the tube. By providing the closing element that may be pressed against an outer wall of the tube via the clamping element by actuation of the actuation element a device is realised that may be removed from the tube for re-opening the tube without the need for cutting an end part of the tube from the tube. Prior to removal of the device from the tube, the clamping element may be brought in the second condition thereby allowing removal of the device from the tube using a relative low force.

A further benefit of the device according to the present disclosure is that there is no need for glue, solder or tooling such as a wrench for closing of the tube. Instead a user may actuate the device via the actuation element for bring the clamping element from the second condition in the first condition and vice versa.

Within the context of the present disclosure, closing of the tube should be understood as capping an open end of the tube so as to avoid that a fluid may exit or enter the tube via the open end of the tube.

Preferably, said closing element is rotation symmetric.

It is beneficial, if said closing element comprises a resilient material, preferably a resilient material comprising rubber. A resilient material, preferably comprising rubber, is beneficial for realising a relative large friction coefficient between the tube and the closing element for realising a relative large clamping force without the need for a relative large clamping portion.

Said closing element comprises a bottom part arranged for capping, in use, said tube and a wall part extending away from said bottom part, wherein said wall part encloses an angle of substantially 90 degrees with said bottom part. An angle of substantially 90 degrees is beneficial for allowing the wall part, during use, to extend along an axial direction of the tube

Said clamping portion comprises said wall part.

Said closing element comprises a thickened wall part at a side of said wall apart facing away from said bottom part.

Said sealing portion comprises said thickened wall part.

Said clamping element comprises a plurality of clamping organs arranged for said transferring, in said first condition of said clamping element, of said clamping force and said sealing force.

Said plurality of clamping organs, preferably each one of said plurality of clamping organs, comprises a recess for at least partly receiving said thickened wall part. This is beneficial for realising a form-locked connection between the clamping element and the closing element for maintaining the closing element in a position relative to the clamping element during for instance providing of the device onto the tube before bringing the clamping element from the second condition in the first condition. Moreover, the recess allows for transferring the sealing force in a beneficial manner to the closing element for realising a relative good sealing.

Preferably, an outer surface of said plurality of clamping organs at a side of said plurality of clamping organs facing away, during use, from said tube, at least in said second condition of said clamping element, diverges away from said tube under a first acute angle and wherein an outer surface of said actuation element at a side of said actuation element facing, during use, said tube diverges away from said tube under a second acute angle such that, at least in said second condition of said clamping element, said first acute angle is larger than said second acute angle.

In this regard, it is beneficial if said device is arranged such that said first acute angle is smaller in said first condition of said clamping element than in said second condition of said clamping element.

It is beneficial if said clamping element is arranged for moving relative to said actuation element in an axial direction for bringing said clamping element in said first condition.

In this regard, it is advantageous if said clamping element is provided with a first screw thread and said actuation element is provided with a second screw thread, wherein said second screw thread is arranged for cooperation with said first screw thread for realising, in use, said moving in said axial direction of said clamping element relative to said actuation element.

Preferably, said first screw thread and said second screw thread are arranged for bringing said clamping element from said second condition into said first condition by rotating, in use, said actuation element relative to said clamping element, about a rotation axis, through an angle in the range of 60 - 120 degrees, preferably in the range of 80 - 100 degrees, more preferably 90 degrees.

Preferably said clamping element is provided with protrusions and said actuation element is provided with a second screw thread, wherein said second screw thread is arranged for cooperation with said protrusions for realising, in use, said moving in said axial direction of said clamping element relative to said actuation element. Providing the clamping element with protrusions is beneficial for realising a relative large displacement of the clamping element in the axial direction of the clamping element relative to the actuation element when rotating the actuation element relative to the clamping element through a relative small angle about the rotation axis. This is beneficial for realising a relative large clamping force without the need for rotating the clamping element relative to the actuation element over a relative large angle.

In this regard, it is beneficial if said protrusions are equally spaced along a circumference of said clamping element. This is beneficial for realising a relative reliable and controlled moving in said axial direction of said clamping element when rotating the clamping element relative to the actuation element.

It is advantageous if said clamping element comprises six protrusions. A total number of six protrusion is beneficial for realizing a reliable functioning of the device while avoiding the need for use of a relative large amount of material for manufacturing the clamping element.

Preferably, said protrusions and said second screw thread are arranged for bringing said clamping element from said second condition into said first condition by rotating, in use, said actuation element relative to said clamping element, about a rotation axis, through an angle in the range of 30 - 120 degrees, preferably 60 degrees.

In an embodiment of the device according to the present disclosure, said screw thread is formed by elongated recesses arranged for receiving said protrusions at least partly

In an embodiment of the device according to the present disclosure, said rotation axis is substantially parallel to said actuation axis.

Preferably, an outer diameter of said clamping element at a location of said clamping organs is larger than an inner diameter a clamping element receiving space arranged for at least partly receiving, by said actuation element, said clamping element.

The present disclosure will now be explained by means of a description of a preferred embodiment of a device according to the present disclosure, in which reference is made to the following schematic figures, in which:

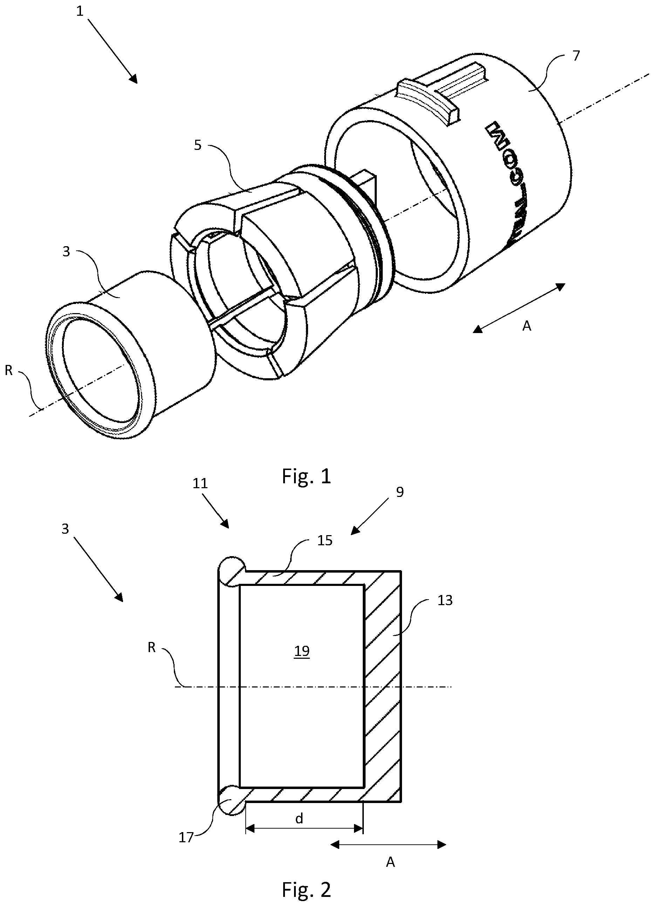

Fig. 1: in exploded view a device according to the present disclosure is shown;
Fig. 2: in cross-section an element of the device from Fig. 1 is shown;

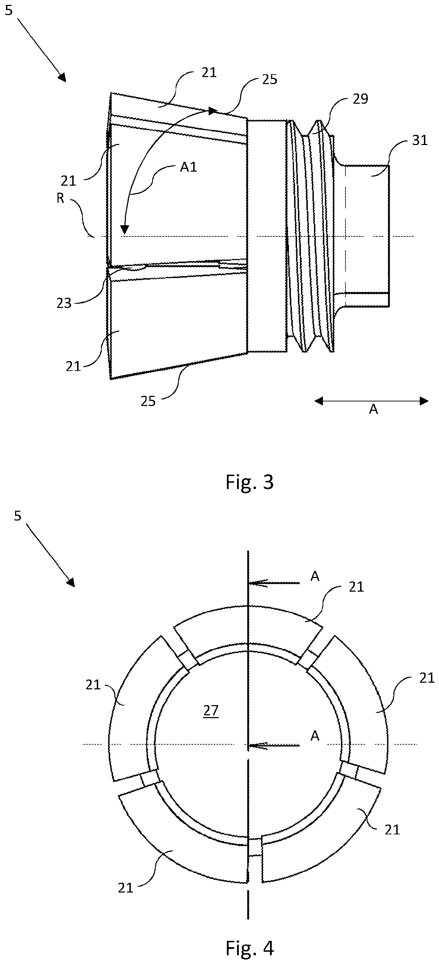

Fig. 3 - 4: a further element of the device from Fig. 1 is shown;

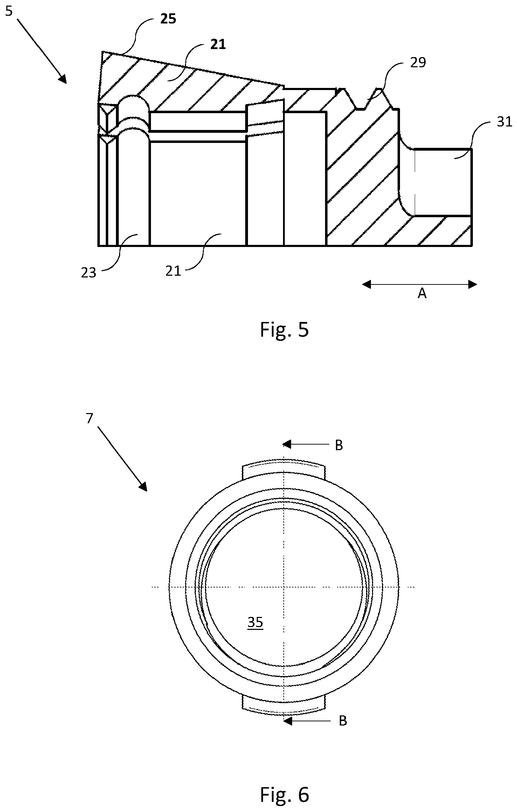

Fig. 5: cross-section A - A of the element from Fig. 3 is shown;
Fig. 6: a side view of another element of the device from Fig. 1 is shown;

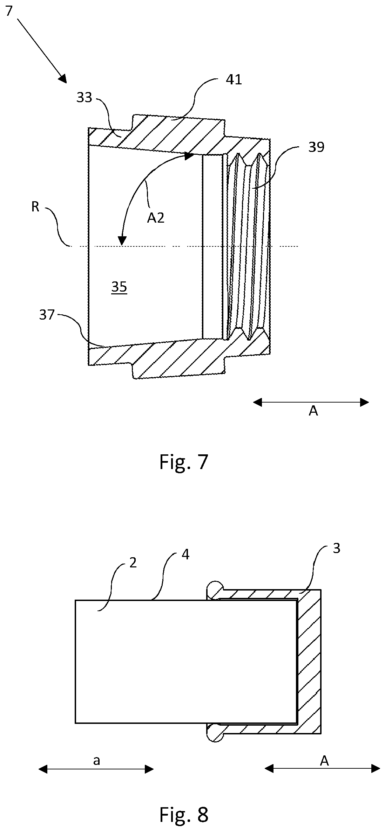

Fig. 7: a cross section B - B of the another element from Fig. 6 is shown;
Fig. 8: a cross-section of an assembly a part of a water supply tube and an element of a device according to the present disclosure is shown;

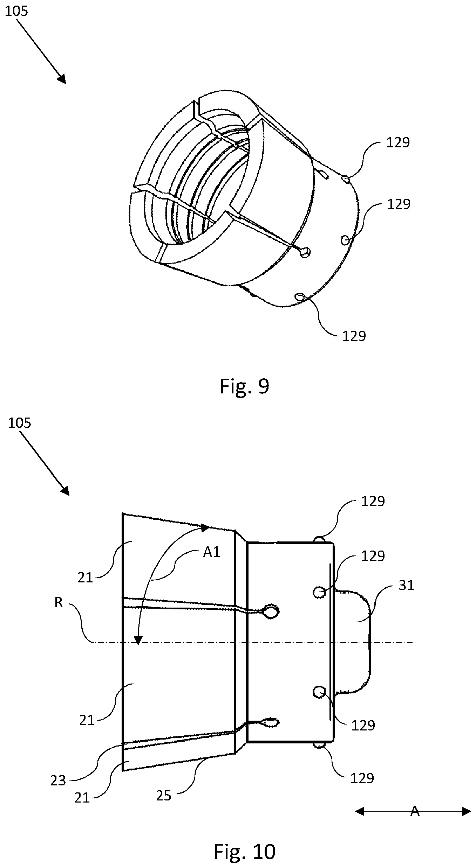

Fig. 9 - 10: another embodiment of the further element is shown;

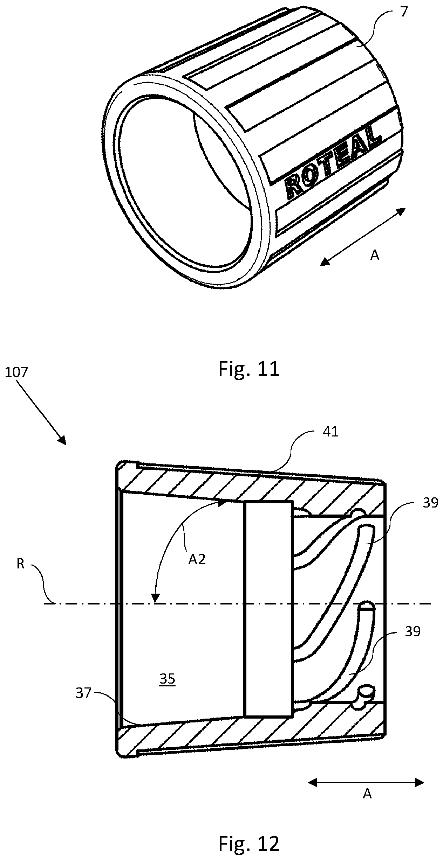

Fig. 11 - 12: another embodiment of the another element is shown.

Device 1 is arranged for closing a tube 2 having an axial direction a, such as a water supply tube. The device 1 comprises a closing element 3, a clamping element 5 and an actuation element 7. In use of the device 1, when said device 1 is applied to a tube for closing the tube, the axial direction a of the tube 2 is parallel to an axial direction A of the device 1.

The closing element 3 is rotation symmetric about a rotation axis R and arranged for being in contact with an outer surface 4 of said tube 2. The closing element 3 comprises a rubber material for realising a relative elastic material for allowing said closing element 3 to be deformed under the influence of a force applied to the closing element 3. The closing element 3 is formed of a bottom part 13, a wall part 15 and a thickened wall part 17. The closing element 3 encloses a receiving space 19 arranged for receiving an end part of the tube 2. The bottom part 13 is arranged for, in use, capping the tube at the end face of the tube. The wall part 15 extends away from the bottom part 13 under an angle of substantially 90 degrees over a distance in the range of 15 mm to 25 mm. The wall part 15 extends along a distance d in the axial direction A. The clamping force applied, during use, by the device 1, via the closing element 3, is dependent on the length d of the clamping portion 9. A relative large clamping force for a given tube diameter may be realised by a clamping portion 9 extending along a relative large distance d.

The closing element 3 further comprises a clamping portion 9 and a sealing portion 11. The clamping portion 9 comprises the wall part 15 and is arranged for clamping, via the closing element 3, the device 1 onto the tube 2. The sealing portion 11 comprises the thickened wall part 17 and is arranged for sealing the tube 2 by the device 1.

The clamping element 5 is arranged for, in a first condition of the clamping element 5, transferring a clamping force onto the clamping portion 9 of the closing element 3 for realising, via the closing element 3, the clamping by the device 1. Moreover, the clamping element 5 is arranged for transferring, in a first condition of the clamping element 5, a sealing force onto the sealing portion 11 of the closing element 3 for realising, by the device 1, the sealing In a second condition of the clamping element 5, the device 1 may be removed from the tube 2 with relative little effort, whereas in the first condition the device 1 is clamped to the tube 2 making it relative difficult to remove the device 1 from the tube 2. The clamping element 5 comprises a number of clamping organs 21 in the form of clamping fingers, preferably five clamping organs 21 that are distributed evenly along a circumference of the clamping element 5 and mutually spaced from each other at a distance in the range of 1 - 3 mm, preferably 2 mm. The clamping organs 21 at least partly bound a closing element receiving space 27 arranged for receiving the closing element 3. Each one of the clamping organs 21 is provided with a recess 23 on side of the clamping organs 21 that in use are facing the closing element 3. The recess 23 is arranged for at least partly receiving the thickened wall part 17.

An outer surface 25 of the clamping organs 21 that, in use, is facing away from the tube 2 and facing away from the closing element 3 diverges away from the tube 2, at least in the second condition of the clamping element 5, under a first acute angle A1. In other words, the outer surface 25 encloses an angle A1 with said direction A. The angle A1 is in the range of 8 to 15 degrees, preferably 11 degrees. A further outer surface is provided with a screw thread 29. At an end face, the clamping element 5 is provided with an actuation organ 31 for allowing a user to actuate the clamping element 5.

The actuation element 7 is arranged for bringing the clamping element 5 in the first condition or the second condition. The actuation element 7 comprises an actuation wall 33 that at least partly bounds a clamping element receiving space 35 arranged for at least partly receiving the clamping element 5 and the closing element 3. An outer surface 37 of the actuation wall 33 at a side of the actuation wall 33 that in use faces the clamping element 5 diverges away from the tube 2 under a second acute angle A2 such that, at least in said second condition of said clamping element 5, said first acute angle A1 is larger than said second acute angle A2. The second acute angle A2 is in in the range of 3 to 8 degrees, preferably 5 degrees. The actuation wall 33 is at a side thereof provided with further actuation organs 41 for allowing a user to grip the actuation element 7 relative firmly.

An outer diameter range of the clamping element 5 at the location of the clamping organs 21 thereof is such that the actuation element 7 with the outer surface 37 thereof deforms the clamping element 5 when displacing the actuation element 7 along the axial direction A relative to the clamping element 5 for bring the clamping element 5 with the clamping organs 21 thereof from the second condition in the first condition. In the first condition, the outer surface 37 is substantially completely in contact with the outer surface 25 of the clamping organs 21 thereby reducing the first acute angle A1 when moving the clamping element 5 from the second condition to the first condition thereof.

The actuation element 7 is provided with a second screw thread 39. The second screw thread 39 is arranged for cooperation with said first screw thread 29. By rotating the actuation element 7 about said rotation axis R relative to the clamping element 5, the actuation element 7 displaces, in the axial direction A, relative to the clamping element 5. This relative displacement, by rotation of the actuation element 7 relative to the clamping element 5, allows a user to bring the clamping element 5 from the second condition in the first condition when closing a tube 2 and to bring the clamping element 5 from the first condition in the second condition before removing the device 1 from the tube and thereby re-opening the tube 2. Preferably, the first screw thread 29, the second screw thread 39, the first acute angle A1, the second acute angle A2, the outer diameter range of the clamping element 5 at the location of the clamping organs 21 and the inner diameter of the clamping element receiving space 35 are dimensioned such that the clamping element 5 may be brought from the second condition into the first condition by rotating, in use, the actuation element 7 relative to the clamping element 5, about the rotation axis R, through an angle in the range of 60 - 120 degrees, preferably 90 degrees depending on the outer diameter of the tube 2.

The clamping element 5 and the actuation element 7 are made from a plastic such as polypropylene. In an advantageous embodiment the device 1 is manufactured by additive manufacturing.

The clamping element 105 differs mainly from clamping element 5 in that the clamping element 105 is provided with protrusions 129 instead of a first screw thread. Elements of clamping element 105 that are similar to elements of clamping element 5 are provided with a reference number equal to the reference number of the element in clamping element 5.

The actuation element 107 differs mainly from actuation element 7 in that the actuation element 107 is provided with elongated recesses arranged for receiving, at least partly, protrusions 129 of actuation element 105. The elongated recesses are arranged for cooperation with protrusions 129 for realising, in use, the moving in the axial direction A of the clamping element 105 relative to the actuation element (107).

## Claims

1. Device (1) for closing an end of a tube (2) having an axial direction (a), such as a water supply tube, said device (1) comprising:
- a closing element (3) arranged for being in contact with an outer surface (4) of said tube (2), said closing element (3) comprising a clamping portion (9) for clamping, via said closing element (3), said device (1) onto said tube (2) and a sealing portion (11) for sealing, by said device (1), said end of said tube (2), wherein said closing element (3) comprises a bottom part (13) arranged for capping, in use, said tube (2) and a wall part (15) extending away from said bottom part (13), wherein said wall part (15) encloses an angle of substantially 90 degrees with said bottom part (13), wherein said clamping portion (9) comprises said wall part (15);
- a clamping element (5, 105) arranged for, in a first condition of said clamping element (5, 105), transferring a clamping force onto said clamping portion (9) of said closing element (3) for realising, via said closing element (3), said clamping and arranged for, in a second condition of said clamping element (5, 105), allowing said device (1) to be removed from said tube (2), wherein said clamping element (5, 105) comprises a plurality of clamping organs (21) arranged for said transferring, in said first condition of said clamping element (5, 105), said clamping force;
- an actuation element (7, 107) arranged for bringing said clamping element (5, 105) into said first condition or said second condition by actuation of said actuation element (7, 107) about an actuation axis (R),
**characterized in that**,
- said closing element (3) comprises a thickened wall part (17) at a side of said wall part (15) facing away from said bottom part (13), wherein said sealing portion (11) comprises said thickened wall part (17);
- said clamping element (5, 105), in said first condition of said clamping element (5, 105) is arranged for transferring a sealing force onto said sealing portion (11) of said closing element (3) for realising, by said device (1), said sealing; and
- said plurality of clamping organs (21) are arranged for transferring said sealing force and wherein said plurality of clamping organs (21) comprises a recess (23) for at least partly receiving said thickened wall part (17).

2. Device (1) according to claim 1, wherein an outer surface (25) of said plurality of clamping organs (21) at a side of said plurality of clamping organs (21) facing away from said tube (2), at least in said second condition of said clamping element (5, 105), diverges away from said tube (2) under a first acute angle (A1) and wherein an outer surface (37) of said actuation element (7, 107) at a side of said actuation element (7, 107) facing said tube (2) diverges away from said tube (2) under a second acute angle (A2) such that, at least in said second condition of said clamping element (5, 105), said first acute angle (A1) is larger than said second acute angle (A2).

3. Device (1) according to claim 2, wherein said device (1) is arranged such that said first acute angle (A1) is smaller in said first condition of said clamping element (5) than in said second condition of said clamping element (5, 105).

4. Device (1) according to any one of the preceding claims, wherein said clamping element (5, 105) is arranged for moving relative to said actuation element (7, 107) in an axial direction (A) for bringing said clamping element (5, 105) into said first condition.

5. Device (1) according to claim 4, wherein said clamping element (5) is provided with a first screw thread (29) and said actuation element (7, 107) is provided with a second screw thread (39), wherein said second screw thread (39) is arranged for cooperation with said first screw thread (29) for realising, in use, said moving in said axial direction (A) of said clamping element (5) relative to said actuation element (7, 107).

6. Device (1) according to claim 5, wherein said first screw thread (29) and said second screw thread (39) are arranged for bringing said clamping element (5) from said second condition into said first condition by rotating, in use, said actuation element (7, 107) relative to said clamping element (5), about a rotation axis (R), through an angle in the range of 60 - 120 degrees, preferably 90 degrees.

7. Device according to claim 4, wherein said clamping element (105) is provided with protrusions (129) and said actuation element (7, 107) is provided with a second screw thread (39), wherein said second screw thread (39) is arranged for cooperation with said protrusions (129) for realising, in use, said moving in said axial direction (A) of said clamping element (105) relative to said actuation element (7, 107).

8. Device according to claim 7, wherein said protrusions (129) are equally spaced along a circumference of said clamping element (105).

9. Device according to claim 7 or 8, wherein said clamping element (105) comprises six protrusions.

10. Device according to any one of the claims 7 to 9, wherein said protrusions (129) and said second screw thread (39) are arranged for bringing said clamping element (105) from said second condition into said first condition by rotating, in use, said actuation element (7, 107) relative to said clamping element (105), about a rotation axis (R), through an angle in the range of 60 - 120 degrees, preferably 90 degrees.

11. Device according to any one of the claims 7 to 10, wherein said screw thread (39) is formed by elongated recesses arranged for receiving said protrusions (129) at least partly.

12. Device (1) according to claim 6 or 10, wherein said rotation axis (R) is substantially parallel to said actuation axis (R).

13. Device (1) according to any one of the preceding claims, wherein the clamping portion (9) and the sealing portion (11) are formed as integral parts of the closing element (3).

14. Device (1) according to any one of the preceding claims, wherein the closing element (3) encloses a receiving space (19) arranged for receiving an end part of the tube (2).

15. Device (1) according to any one of the preceding claims, wherein, during use, a form-locked connection between the clamping element and the closing element is realised, by receiving in said recess at least partly said thickened wall part, for maintaining the closing element in a position relative to the clamping element.

## Patentansprüche

1. Vorrichtung (1) zum Verschließen eines Endes eines Rohres (2), das eine axiale Richtung (a) aufweist, wie etwa eines Wasserversorgungsrohres, wobei die Vorrichtung (1) Folgendes umfasst:
- ein Verschlusselement (3), das dazu eingerichtet ist, mit einer Außenfläche (4) des Rohres (2) in Kontakt zu stehen, wobei das Verschlusselement (3) einen Klemmabschnitt (9) zum Klemmen der Vorrichtung (1) auf das Rohr (2) über das Verschlusselement (3) und einen Abdichtabschnitt (11) zum Abdichten des Endes des Rohres (2) durch die Vorrichtung (1) umfasst, wobei das Verschlusselement (3) einen Bodenteil (13), der dazu eingerichtet ist, bei Gebrauch das Rohr (2) zu deckeln, und einen Wandteil (15), der sich von dem Bodenteil (13) weg erstreckt, umfasst, wobei der Wandteil (15) einen Winkel von im Wesentlichen 90 Grad mit dem Bodenteil (13) einschließt, wobei der Klemmabschnitt (9) den Wandteil (15) umfasst;
- ein Klemmelement (5, 105), das dazu eingerichtet ist, in einem ersten Zustand des Klemmelements (5, 105) eine Klemmkraft auf den Klemmabschnitt (9) des Verschlusselements (3) zu übertragen, um über das Verschlusselement (3) das Klemmen zu realisieren, und dazu eingerichtet ist, in einem zweiten Zustand des Klemmelements (5, 105) zu erlauben, dass die Vorrichtung (1) von dem Rohr (2) entfernt wird, wobei das Klemmelement (5, 105) eine Mehrzahl von Klemmorganen (21) umfasst, die zum Übertragen der Klemmkraft in dem ersten Zustand des Klemmelements (5, 105) eingerichtet sind;
- ein Betätigungselement (7, 107), das dazu eingerichtet ist, durch Betätigung des Betätigungselements (7, 107) um eine Betätigungsachse (R) das Klemmelement (5, 105) in den ersten Zustand oder den zweiten Zustand zu bringen, **dadurch gekennzeichnet, dass**
- das Verschlusselement (3) an einer Seite des Wandteils (15), die dem Bodenteil (13) abgewandt ist, einen verdickten Wandteil (17) umfasst, wobei der Abdichtabschnitt (11) den verdickten Wandteil (17) umfasst;
- das Klemmelement (5, 105) in dem ersten Zustand des Klemmelements (5, 105) dazu eingerichtet ist, eine Abdichtkraft auf den Abdichtabschnitt (11) des Verschlusselements (3) zu übertragen, um das Abdichten durch die Vorrichtung (1) zu realisieren; und
- die Mehrzahl von Klemmorganen (21) dazu eingerichtet ist, die Abdichtkraft zu übertragen, und wobei die Mehrzahl von Klemmorganen (21) eine Aussparung (23) zum wenigstens teilweisen Aufnehmen des verdickten Wandteils (17) umfasst.

2. Vorrichtung (1) nach Anspruch 1, wobei eine Außenfläche (25) der Mehrzahl von Klemmorganen (21) an einer Seite der Mehrzahl von Klemmorganen (21), die dem Rohr (2) abgewandt ist, wenigstens in dem zweiten Zustand des Klemmelements (5, 105) mit einem ersten spitzen Winkel (A1) von dem Rohr (2) weg verläuft und wobei eine Außenfläche (37) des Betätigungselements (7, 107) an einer Seite des Betätigungselements (7, 107), die dem Rohr (2) zugewandt ist, mit einem zweiten spitzen Winkel (A2) von dem Rohr (2) weg verläuft, derart dass wenigstens in dem zweiten Zustand des Klemmelements (5, 105) der erste spitze Winkel (A1) größer als der zweite spitze Winkel (A2) ist.

3. Vorrichtung (1) nach Anspruch 2, wobei die Vorrichtung (1) derart eingerichtet ist, dass der erste spitze Winkel (A1) in dem ersten Zustand des Klemmelements (5) kleiner als in dem zweiten Zustand des Klemmelements (5, 105) ist.

4. Vorrichtung (1) nach einem der vorangehenden Ansprüche, wobei das Klemmelement (5, 105) dazu eingerichtet ist, sich bezogen auf das Betätigungselement (7, 107) in einer axialen Richtung (A) zu bewegen, um das Klemmelement (5, 105) in den ersten Zustand zu bringen.

5. Vorrichtung (1) nach Anspruch 4, wobei das Klemmelement (5) mit einem ersten Schraubgewinde (29) versehen ist und das Betätigungselement (7, 107) mit einem zweiten Schraubgewinde (39) versehen ist, wobei das zweite Schraubgewinde (39) zum Zusammenwirken mit dem ersten Schraubgewinde (29) eingerichtet ist, um bei Gebrauch das Bewegen des Klemmelements (5) bezogen auf das Betätigungselement (7, 107) in der axialen Richtung (A) zu realisieren.

6. Vorrichtung (1) nach Anspruch 5, wobei das erste Schraubgewinde (29) und das zweite Schraubgewinde (39) dazu eingerichtet sind, das Klemmelement (5) aus dem zweiten Zustand in den ersten Zustand zu bringen, indem bei Gebrauch das Betätigungselement (7, 107) bezogen auf das Klemmelement (5) um eine Drehachse (R) über einen Winkel im Bereich von 60 - 120 Grad, vorzugsweise von 90 Grad, gedreht wird.

7. Vorrichtung nach Anspruch 4, wobei das Klemmelement (105) mit Vorsprüngen (129) versehen ist und das Betätigungselement (7, 107) mit einem zweiten Schraubgewinde (39) versehen ist, wobei das zweite Schraubgewinde (39) zum Zusammenwirken mit den Vorsprüngen (129) eingerichtet ist, um bei Gebrauch das Bewegen des Klemmelements (105) bezogen auf das Betätigungselement (7, 107) in der axialen Richtung (A) zu realisieren.

8. Vorrichtung nach Anspruch 7, wobei die Vorsprünge (129) entlang eines Umfangs des Klemmelements (105) gleichmäßig beabstandet sind.

9. Vorrichtung nach Anspruch 7 oder 8, wobei das Klemmelement (105) sechs Vorsprünge umfasst.

10. Vorrichtung nach einem der Ansprüche 7 bis 9, wobei die Vorsprünge (129) und das zweite Schraubgewinde (39) dazu eingerichtet sind, das Klemmelement (105) aus dem zweiten Zustand in den ersten Zustand zu bringen, indem bei Gebrauch das Betätigungselement (7, 107) bezogen auf das Klemmelement (105) um eine Drehachse (R) über einen Winkel im Bereich von 60 - 120 Grad, vorzugsweise von 90 Grad, gedreht wird.

11. Vorrichtung nach einem der Ansprüche 7 bis 10, wobei das Schraubgewinde (39) durch lang gestreckte Aussparungen ausgebildet ist, die zum wenigstens teilweisen Aufnehmen der Vorsprünge (129) eingerichtet sind.

12. Vorrichtung (1) nach Anspruch 6 oder 10, wobei die Drehachse (R) im Wesentlichen parallel zu der Betätigungsachse (R) ist.

13. Vorrichtung (1) nach einem der vorangehenden Ansprüche, wobei der Klemmabschnitt (9) und der Abdichtabschnitt (11) als einstückige Teile des Verschlusselements (3) ausgebildet sind.

14. Vorrichtung (1) nach einem der vorangehenden Ansprüche, wobei das Verschlusselement (3) einen Aufnahmeraum (19) umschließt, der dazu eingerichtet ist, einen Endteil des Rohres (2) aufzunehmen.

15. Vorrichtung (1) nach einem der vorangehenden Ansprüche, wobei bei Gebrauch eine formschlüssige Verbindung zwischen dem Klemmelement und dem Verschlusselement realisiert wird, indem in der Aussparung wenigstens teilweise der verdickte Wandteil aufgenommen wird, um das Verschlusselement in einer Position bezogen auf das Klemmelement zu halten.

## Revendications

1. Dispositif (1) pour fermer une extrémité d'un tube (2) ayant une direction axiale (a), tel qu'un tube d'alimentation en eau, ledit dispositif (1) comprenant :
- un élément de fermeture (3) agencé pour être en contact avec une surface extérieure (4) dudit tube (2), ledit élément de fermeture (3) comprenant une partie de serrage (9) pour serrer, via ledit élément de fermeture (3), ledit dispositif (1) sur ledit tube (2) et une partie de scellement (11) pour sceller, par ledit dispositif (1), ladite extrémité dudit tube (2), dans lequel ledit élément de fermeture (3) comprend une partie inférieure (13) agencée pour boucher, en utilisation, ledit tube (2) et une partie de paroi (15) s'étendant à l'opposé de ladite partie inférieure (13), dans lequel ladite partie de paroi (15) forme un angle de sensiblement 90 degrés avec ladite partie inférieure (13), dans lequel ladite partie de serrage (9) comprend ladite partie de paroi (15) ;
- un élément de serrage (5, 105) agencé pour, dans un premier état dudit élément de serrage (5, 105), transférer une force de serrage sur ladite partie de serrage (9) dudit élément de fermeture (3) pour réaliser, via ledit élément de fermeture (3), ledit serrage et agencé pour, dans un second état dudit élément de serrage (5, 105), permettre audit dispositif (1) d'être retiré dudit tube (2), dans lequel ledit élément de serrage (5, 105) comprend une pluralité d'organes de serrage (21) agencés pour ledit transfert, dans ledit premier état dudit élément de serrage (5, 105), de ladite force de serrage ;
- un élément d'actionnement (7, 107) agencé pour amener ledit élément de serrage (5, 105) dans ledit premier état ou ledit second état par actionnement dudit élément d'actionnement (7, 107) autour d'un axe d'actionnement (R),
**caractérisé en ce que**,
- ledit élément de fermeture (3) comprend une partie de paroi épaissie (17) au niveau d'un côté de ladite partie de paroi (15) tourné à l'opposé de ladite partie inférieure (13), dans lequel ladite partie de scellement (11) comprend ladite partie de paroi épaissie (17) ;
- ledit élément de serrage (5, 105), dans ledit premier état dudit élément de serrage (5, 105), est agencé pour transférer une force de scellement sur ladite partie de scellement (11) dudit élément de fermeture (3) pour réaliser, par ledit dispositif (1), ledit scellement ; et
- ladite pluralité d'organes de serrage (21) sont agencés pour transférer ladite force de scellement et dans lequel ladite pluralité d'organes de serrage (21) comprend un évidement (23) pour recevoir au moins partiellement ladite partie de paroi épaissie (17).

2. Dispositif (1) selon la revendication 1, dans lequel une surface extérieure (25) de ladite pluralité d'organes de serrage (21) au niveau d'un côté de ladite pluralité d'organes de serrage (21) tourné à l'opposé dudit tube (2), au moins dans ledit second état dudit élément de serrage (5, 105), s'écarte dudit tube (2) sous un premier angle aigu (A1) et dans lequel une surface extérieure (37) dudit élément d'actionnement (7, 107) au niveau d'un côté dudit élément d'actionnement (7, 107) tourné vers ledit tube (2) s'écarte dudit tube (2) sous un second angle aigu (A2) de sorte que, au moins dans ledit second état dudit élément de serrage (5, 105), ledit premier angle aigu (A1) soit plus grand que ledit second angle aigu (A2).

3. Dispositif (1) selon la revendication 2, dans lequel ledit dispositif (1) est agencé de sorte que ledit premier angle aigu (A1) soit plus petit dans ledit premier état dudit élément de serrage (5) que dans ledit second état dudit élément de serrage (5, 105).

4. Dispositif (1) selon l'une quelconque des revendications précédentes, dans lequel ledit élément de serrage (5, 105) est agencé pour se déplacer par rapport audit élément d'actionnement (7, 107) dans une direction axiale (A) pour amener ledit élément de serrage (5, 105) dans ledit premier état.

5. Dispositif (1) selon la revendication 4, dans lequel ledit élément de serrage (5) est pourvu d'un premier filetage de vis (29) et ledit élément d'actionnement (7, 107) est pourvu d'un second filetage de vis (39), dans lequel ledit second filetage de vis (39) est agencé pour coopérer avec ledit premier filetage de vis (29) pour réaliser, en utilisation, ledit déplacement dans ladite direction axiale (A) dudit élément de serrage (5) par rapport audit élément d'actionnement (7, 107).

6. Dispositif (1) selon la revendication 5, dans lequel ledit premier filetage de vis (29) et ledit second filetage de vis (39) sont agencés pour amener ledit élément de serrage (5) dudit second état dans ledit premier état par rotation, en utilisation, dudit élément d'actionnement (7, 107) par rapport audit élément de serrage (5), autour d'un axe de rotation (R), selon un angle se trouvant dans la plage allant de 60 à 120 degrés, de préférence de 90 degrés.

7. Dispositif selon la revendication 4, dans lequel ledit élément de serrage (105) est pourvu de saillies (129) et ledit élément d'actionnement (7, 107) est pourvu d'un second filetage de vis (39), dans lequel ledit second filetage de vis (39) est agencé pour coopérer avec lesdites saillies (129) pour réaliser, en utilisation, ledit déplacement dans ladite direction axiale (A) dudit élément de serrage (105) par rapport audit élément d'actionnement (7, 107).

8. Dispositif selon la revendication 7, dans lequel lesdites saillies (129) sont espacées de façon égale le long d'une circonférence dudit élément de serrage (105).

9. Dispositif selon la revendication 7 ou 8, dans lequel ledit élément de serrage (105) comprend six saillies.

10. Dispositif selon l'une quelconque des revendications 7 à 9, dans lequel lesdites saillies (129) et ledit second filetage de vis (39) sont agencés pour amener ledit élément de serrage (105) dudit second état dans ledit premier état par rotation, en utilisation, dudit élément d'actionnement (7, 107) par rapport audit élément de serrage (105), autour d'un axe de rotation (R), selon un angle se trouvant dans la plage allant de 60 à 120 degrés, de préférence de 90 degrés.

11. Dispositif selon l'une quelconque des revendications 7 à 10, dans lequel ledit filetage de vis (39) est formé d'évidements allongés agencés pour recevoir au moins partiellement lesdites saillies (129).

12. Dispositif (1) selon la revendication 6 ou 10, dans lequel ledit axe de rotation (R) est sensiblement parallèle audit axe d'actionnement (R).

13. Dispositif (1) selon l'une quelconque des revendications précédentes, dans lequel la partie de serrage (9) et la partie de scellement (11) sont formées comme parties intégrantes de l'élément de fermeture (3).

14. Dispositif (1) selon l'une quelconque des revendications précédentes, dans lequel l'élément de fermeture (3) renferme un espace de réception (19) agencé pour recevoir une partie d'extrémité du tube (2).

15. Dispositif (1) selon l'une quelconque des revendications précédentes, dans lequel, lors de l'utilisation, une liaison par complémentarité de forme entre l'élément de serrage et l'élément de fermeture est réalisée, en recevant dans ledit évidement au moins partiellement ladite partie de paroi épaissie, pour maintenir l'élément de fermeture dans une position par rapport à l'élément de serrage.
